# EUROPEAN PATENT APPLICATION

(11) **EP 4 763 588 A1**
(43) Date of publication of application: **24.06.2026**
(21) Application number: 25219352.9
(22) Date of filing: 28.11.2025
(51) Int. Cl.: B60L 53/122, B60L 53/126, B60L 53/20, B60L 53/62, B60L 53/66, B60L 58/21, H02J 7/04, H02J 50/10

(54) **WIRELESS CHARGING SYSTEM AND CONTROL METHOD THEREOF**

(30) Priority: 23.12.2024 KR 20240194180; 02.10.2025 KR 20250144638
(71) Applicant: Hyundai Motor Company, Seoul 06797 (KR); Kia Corporation, Seoul 06797 (KR); Myongji University Industry and Academia Cooperation Foundation, Gyeonggi-do 54538 (KR)
(72) Inventor: CHI, Soung Hwan, 18280 Hwaseong-si, Gyeonggi-do (KR); SEONG, Jae Yong, 08826 Seoul (KR); LIM, Chang Min, 58449 Jeollanam-do (KR); LEE, Il Oun, 16822 Yongin-si, Gyeonggi-do (KR)
(74) Representative: Viering, Jentschura & Partner mbB Patent- und Rechtsanwälte

(57) **Abstract**

A wireless charging for charging a battery by controlling a PFC circuit, a DC-DC converter, and an IPT device sequentially connected, includes: a battery charging controller configured to receive a battery voltage value and a current value of the battery, which are sensed through a battery voltage and current sensor, and generate a charging control signal based on the received voltage value and current value; a PFC controller configured to control switching operations of the PFC so as to adjust a direct-current bus voltage supplied to the DC-DC converter based on the charging control signal, and output a converter operation enable signal; and a converter controller configured to control switching of the DC-DC converter based on the converter operation enable signal and the charging control signal, thereby guaranteeing stable and efficient battery charging regardless of positional errors and matching variations between the transmission and reception coils.

## Description

### BACKGROUND

### (a) Technical Field

The present disclosure relates to a wireless charging system and a control method for controlling the wireless charging system and, more particularly, to a wireless charging system configured to match between transmission and reception coils and a control method for controlling the wireless charging system.

### (b) Background

The description provided herein is merely background information for the exemplary embodiments and does not constitute prior art.

Recently developed electric vehicles (EVs) drive motors using the power of a battery and, compared to conventional gasoline engine vehicles, have advantages in that exhaust gas and noise, which are sources of air pollution, are reduced, failures are fewer, lifespan is longer, and driving operation is simpler.

EVs ma comprise hybrid electric vehicles (HEVs), plug-in hybrid electric vehicles (PHEVs), and EVs, depending on the driving source. The HEV has an engine as a main power source and a motor as an auxiliary power source. The PHEV has a motor as a main power source and an engine used when the battery is discharged. The EV has a motor but does not have an engine.

An EV charging system can be basically defined as a system that charges a battery mounted in an electric vehicle using power of a distribution grid of commercial power or power of an energy storage device. Such an EV charging system may take various forms depending on the type of electric vehicle. For example, the EV charging system may comprise a conductive charging system using a cable or a non-contact type wireless power transfer system.

During charging of an EV, a vehicle assembly (VA) mounted in the EV forms an inductive resonant coupling with a transmission pad of a ground assembly (GA) located at a charge station or charging spots, and may charge the battery of the EV using power delivered from the ground assembly through the inductive resonant coupling.

In general, wireless power transfer (WPT) of an EV is divided into a transmitter including a transmission pad installed outside the vehicle, and a receiver including a reception pad and installed inside the vehicle. The transmitter converts energy supplied from a power system into a high-frequency alternating current signal through a switching device and delivers the high-frequency alternating current signal to the transmission pad. A voltage is induced in the reception pad by a time-varying magnetic field generated from the transmission pad. A power conversion circuit mounted in the receiver converts power received through the reception pad into a direct current voltage to charge a high-voltage battery.

In the wireless charging system of an EV, coupling between a transmission coil and a reception coil greatly varies depending on a matching position (coordinates) between power transmission and reception pads, thereby causing a problem in that power transfer efficiency is significantly reduced or power transfer is not performed. In order to solve such a problem, international standards stipulate that charging may be performed even though the degree of matching between power transmission and reception pads is displaced up to a maximum of 70 mm or 100 mm from the centers of a transmitter and a receiver, and wireless charging systems are being developed so that a power reception pad mounted in the electric vehicle may be positioned within an internationally defined matching coordinate range based on a transmission pad installed on the ground, by mounting various sensors and mechanical devices. Existing systems require various sensors for matching, charging coil position detection devices, and mechanical devices, which increases the cost of the wireless charging system and causes maintenance costs.

### SUMMARY

An object of the present disclosure for solving the above-described problems is to provide a wireless charging system robust to matching between transmission and reception coils.

Another object of the present disclosure is to provide a control method of such a wireless charging system.

The wireless charging system according to exemplary embodiments of the present disclosure for solving the above-described tasks is a wireless charging system that charges a battery by controlling a power factor correction (PFC) circuit, a DC-DC converter, and an inductive power transfer (IPT) device sequentially connected, and includes: a battery charging controller configured to receive a battery voltage value and a current value of the battery, which are sensed through a battery voltage and current sensor, and generate a charging control signal based on the received voltage value and current value; a PFC controller configured to control switching operations of the PFC so as to adjust a direct-current bus voltage supplied to the DC-DC converter based on the charging control signal, and output a converter operation enable signal; and a converter controller configured to control switching of the DC-DC converter based on the converter operation enable signal and the charging control signal.

The battery charging controller may determine a charging state of the battery, based on the sensed voltage value, and the sensed current value, and reference values.

The converter controller may adjust a duty ratio of the DC-DC converter based on the charging control signal and the converter operation enable signal.

When the battery voltage value is lower than a first threshold value, the duty ratio of the DC-DC converter may be controlled to be increased, and when the battery voltage value is higher than a second threshold value, the duty ratio of the DC-DC converter may be controlled to be decreased.

The wireless charging system may further include a bypass switch for directly connecting the PFC and the IPT device by bypassing the DC-DC converter, and the bypass switch may be controlled by the converter controller based on a charging state of the battery.

The converter controller may drive the bypass switch when the sensed battery voltage value substantially matches an output voltage value of the IPT device.

The battery charging controller may control whether to activate the converter operation enable signal according to a charging state of the battery.

The converter operation enable signal may be deactivated when the received battery voltage value is equal to or lower than a reference voltage, and may be activated when the received battery voltage value rises to equal to or higher than the reference voltage.

The battery charging controller may adjust the charging control signal based on whether a maximum charging power condition is satisfied.

The maximum charging power condition may be determined to be satisfied when battery current reaches a predetermined limit current or output power of the IPT device reaches a predetermined limit power, and the charging control signal may be adjusted so that charging current is limited when the maximum charging power condition is satisfied.

A control method of a wireless charging system according to exemplary embodiments of the present disclosure for solving the above-described tasks is a control method of a wireless charging system that charges a battery by controlling a power factor correction (PFC) circuit, a DC-DC converter, and an inductive power transfer (IPT) device sequentially connected, the method including: receiving a voltage value and a current value of the battery sensed through a battery voltage and current sensor; generating a charging control signal based on the received voltage value and current value; controlling switching operations of the PFC based on the charging control signal so as to adjust a direct-current bus voltage supplied to the DC-DC converter, and outputting a converter operation enable signal; and controlling switching of the DC-DC converter based on the converter operation enable signal and the charging control signal.

The control method of the wireless charging system may further include determining a charging state, based on the sensed battery voltage value, and the sensed current value, and reference values.

The switching control of the DC-DC converter may be control for adjusting a switching duty ratio based on the charging control signal and the converter operation enable signal.

The switching duty ratio may be controlled such that when the battery voltage value is lower than a first threshold value, the duty ratio of the DC-DC converter increases, and when the battery voltage value is higher than a second threshold value, the duty ratio decreases.

The control method of the wireless charging system may further include selectively operating a bypass switch for directly connecting the PFC and the IPT device by bypassing the DC-DC converter according to a charging state of the battery.

In the selectively operating of the bypass switch, the bypass switch may be driven when the sensed battery voltage value substantially matches an output voltage value of the IPT device.

The control method of the wireless charging system may further include controlling whether to activate the converter operation enable signal according to a charging state of the battery.

The converter operation enable signal may be deactivated at an initial charging stage where battery voltage is equal to or lower than a reference voltage, and may be activated at a charging section where battery voltage rises to equal to or higher than the reference voltage.

In the charging control signal generating step, a maximum charging power condition may be determined, and charging power may be adjusted according to a determination result.

The maximum charging power condition may be determined when battery current reaches a predetermined limit current or output power of the IPT device reaches a predetermined limit power.

The wireless charging system according to the present disclosure may robustly perform battery charging even when a matching state between transmission and reception coils varies, by organically operating a battery charging controller, a PFC controller, and a converter controller.

Furthermore, the converter controller may activate or bypass the DC-DC converter according to the state of the battery, such that when a difference between an output voltage of the IPT and a required voltage of the battery is large, precise voltage control is performed, and when the voltages substantially match, conversion loss is minimized to enable high-efficiency charging.

Accordingly, the wireless charging system according to the present disclosure may guarantee stable and efficient battery charging regardless of positional errors and matching variations between the transmission and reception coils.

According to an aspect of the present disclosure, a wireless charging system for charging a battery is provided. The wireless charging system may comprise a computing device, comprising a processor and a memory. The memory may be configured to store instructions that, when executed by the processor, are configured to cause the processor to receive a voltage value and a current value of the battery, the voltage value and the current value being sensed through a battery voltage and current sensor, generate a charging control signal based on the received voltage value and current value, control a switching operation of a sequentially connected power factor correction (PFC) circuit to regulate a direct-current bus voltage supplied to a DC-DC converter based on the charging control signal and output a converter enable signal, and control a switching operation of the DC-DC converter based on the converter enable signal and the charging control signal.

According to an exemplary embodiment, the computing device may be configured to determine a charging state of the battery based on the sensed voltage value, the sensed current value, and reference values.

According to an exemplary embodiment, the computing device may be configured to adjust a duty ratio of the DC-DC converter based on the charging control signal and the converter enable signal.

According to an exemplary embodiment, the computing device is configured to increase the duty ratio of the DC-DC converter when the battery voltage value is lower than a first threshold value, and decrease the duty ratio of the DC-DC converter when the battery voltage value is higher than a second threshold value.

According to an exemplary embodiment, the wireless charging system may comprise a bypass switch configured to directly connect the PFC and an inductive power transfer (IPT) device by bypassing the DC-DC converter. The computing device may be configured to control the bypass switch based on a charging state of the battery.

According to an exemplary embodiment, the computing device may be configured to drive the bypass switch when the sensed battery voltage value substantially matches an output voltage value of the IPT device.

According to an exemplary embodiment, the computing device may be configured to control activation of the converter enable signal according to a charging state of the battery.

According to an exemplary embodiment, the computing device may be configured to deactivate the converter enable signal when the received battery voltage value is equal to or less than a reference voltage and activate the converter enable signal when the received battery voltage value rises to be equal to or greater than the reference voltage.

According to an exemplary embodiment, the computing device may be configured to adjust the charging control signal based on whether a maximum charging power condition is satisfied.

According to an exemplary embodiment, the maximum charging power condition may be determined to be satisfied when the battery current reaches a predetermined limit current or output power of an inductive power transfer (IPT) device reaches a predetermined limit power, and the charging control signal is adjusted so that charging current is limited when the maximum charging power condition is satisfied.

According to an aspect of the present disclosure, a control method of a wireless charging system for charging a battery is provided. The control method may comprise, using a computing device, receiving a voltage value and a current value of a battery sensed through a battery voltage sensor and a current sensor, generating a charging control signal based on the received voltage value and current value, controlling a switching operation of a sequentially connected power factor correction (PFC) circuit to regulate a direct-current bus voltage supplied to a DC-DC converter based on the charging control signal, outputting a converter enable signal, and controlling a switching operation of the DC-DC converter based on the converter enable signal and the charging control signal.

According to an exemplary embodiment, the control method may comprise determining a charging state based on the sensed battery voltage value, the sensed current value, and a reference value.

According to an exemplary embodiment, the controlling switching of the DC-DC converter may comprise adjusting a switching duty ratio based on the charging control signal and the converter enable signal.

According to an exemplary embodiment, the adjusting the switching duty ratio may comprise increasing the duty ratio of the DC-DC converter when the battery voltage value is lower than a first threshold value, and decreasing the duty ratio of the DC-DC converter when the battery voltage value is higher than a second threshold value.

According to an exemplary embodiment, the control method may comprise selectively operating a bypass switch to directly connect the PFC and an inductive power transfer (IPT) device by bypassing the DC-DC converter, according to a charging state of the battery.

According to an exemplary embodiment, the selectively operating the bypass switch may comprise driving the bypass switch when the sensed battery voltage value substantially matches an output voltage value of the IPT device.

According to an exemplary embodiment, the control method may comprise controlling activation of the converter enable signal according to a charging state of the battery.

According to an exemplary embodiment, the control method may comprise deactivating the converter enable signal during an initial charging stage when the battery voltage is equal to or less than a reference voltage, and activating the converter enable signal during a charging section when the battery voltage rises to be equal to or greater than the reference voltage.

According to an exemplary embodiment, the generating the charging control signal may comprise determining whether a maximum charging power condition is satisfied, and adjusting a charging power according to a determination result.

According to an exemplary embodiment, the maximum charging power condition may be determined when the battery current reaches a predetermined limit current, or output power of an inductive power transfer (IPT) device reaches a predetermined limit power.

### BRIEF DESCRIPTION OF THE DRAWINGS

The foregoing and other aspects, features, and advantages, as well as the following detailed description of the embodiments, will be better understood when read in conjunction with the accompanying drawings. However, the present disclosure is not intended to be limited to the details shown in the drawings, and various modifications and structural changes may be made therein without departing from the spirit of the present disclosure and within the scope and range of equivalents of the claims. Like reference numbers and designations in the various drawings indicate like elements.
FIG. 1 is a conceptual diagram illustrating a communication system, according to an exemplary embodiment of the present disclosure.
FIG. 2 is a block diagram illustrating a communication node configuring the communication system, according to an exemplary embodiment of the present disclosure.
FIG. 3 is a circuit diagram illustrating a wireless charging device, according to an exemplary embodiment of the present disclosure.
FIG. 4 is a block diagram illustrating a wireless charging system, according to an exemplary embodiment of the present disclosure.
FIG. 5 is a circuit diagram illustrating a power factor correction (PFC) circuit shown in FIG. 4, according to an exemplary embodiment of the present disclosure.
FIG. 6 is a circuit diagram illustrating a DC-DC converter (buck converter) shown in FIG. 4, according to an exemplary embodiment of the present disclosure.
FIG. 7 is a circuit diagram illustrating an IPT device shown in FIG. 4, according to an exemplary embodiment of the present disclosure.
FIG. 8 is a graph illustrating a constant current-constant power-constant voltage charging method of a battery, according to an exemplary embodiment of the present disclosure.
FIG. 9 is a block diagram illustrating a battery charging controller shown in FIG. 4, according to an exemplary embodiment of the present disclosure.
FIG. 10 is a block diagram illustrating a PFC controller shown in FIG. 4, according to an exemplary embodiment of the present disclosure.
FIGS. 11A and 11B are block diagrams illustrating a converter and charging system controller shown in FIG. 4, according to an exemplary embodiment of the present disclosure.
FIGS. 12A and 12B are an operation mode sequence in which a bypass switch shown in FIG. 3 is turned off in the DC-DC converter (buck converter) of the wireless charging system shown in FIG. 4, according to an exemplary embodiment of the present disclosure.
FIGS. 13A and 13B are an operation sequence of a bypass mode in which the bypass switch shown in FIG. 3 is turned on in the DC-DC converter (buck converter) of the wireless charging system shown in FIG. 4, according to an exemplary embodiment of the present disclosure.
FIG. 14 is a flowchart illustrating a control method of the wireless charging system shown in FIG. 4, according to an exemplary embodiment of the present disclosure.
FIG. 15 is a block diagram illustrating a generalized configuration for performing a control method of the wireless charging system according to an exemplary embodiment of the present disclosure.

The drawings described herein are for illustration purposes only and are not intended to limit the scope of the present disclosure in any way.

### DETAILED DESCRIPTION

For a clearer understanding of the features and advantages of the present disclosure, exemplary embodiments of the present disclosure will be described in detail with reference to the accompanied drawings. However, it should be understood that the present disclosure may be not be limited to particular embodiments disclosed herein but includes all modifications, equivalents, and alternatives falling within the spirit and scope of the present disclosure. In the drawings, similar or corresponding components may be designated by the same or similar reference numerals.

The terminologies including ordinals such as "first" and "second" or another identifiers such as "A" and "B" may be used to discriminate a component from the other ones but may not be intended to be limiting to a specific component. For example, a second component may be referred to as a first component and, similarly, a first component may also be referred to as a second component without departing from the scope of the present disclosure. As used herein, the term "and/or" may include a presence of one or more of the associated listed items and any and all combinations of the listed items.

When a component is referred to as being "connected" or "coupled" to another component, the component may be directly connected or coupled logically or physically to the other component or indirectly through an object therebetween. Contrarily, when a component is referred to as being "directly connected" or "directly coupled" to another component, it is to be understood that there is no intervening object between the components. Other words used to describe the relationship between elements should be interpreted in a similar fashion.

The terminologies may be used herein for the purpose of describing particular exemplary embodiments only and may not be intended to limit the present disclosure. The singular forms include plural referents as well unless the context clearly dictates otherwise. Also, the expressions "comprises" or "includes" may be used to refer a presence of a combination of stated features, numbers, processing steps, operations, elements, or components, but may not be intended to preclude a presence or addition of another feature, number, processing step, operation, element, or component.

Unless defined otherwise, all terms used herein, including technical or scientific terms, have the same meaning as commonly understood by those of ordinary skill in the art to which the present disclosure pertains. Terms such as those defined in a commonly used dictionary should be interpreted as having meanings consistent with their meanings in the context of related literatures and will not be interpreted as having ideal or excessively formal meanings unless explicitly defined in the present application.

Hereinafter, preferred embodiments of the present disclosure will be described in greater detail with reference to the accompanying drawings. In describing the present disclosure, to facilitate an overall understanding, the same reference numerals are used for identical components in the drawings, and repeated description of identical components is omitted. Not only the embodiments explicitly described in the present disclosure, but also operations according to combinations, extensions, and/or modifications of the embodiments may be performed. Some operations may be omitted, and the order of performing the operations may be changed.

The operations of the method according to the present disclosure may be implemented as a program or code readable by a computer on a computer-readable recording medium. The computer-readable recording medium includes all types of storage devices in which information readable by a computer system is stored. In addition, the computer-readable recording medium may be distributed across computer systems connected through a network, such that a program or code readable by a computer is stored and executed in a distributed manner.

The computer-readable recording medium may further include hardware devices specifically configured to store and execute program instructions, such as ROM, RAM, or flash memory. The program instructions may include not only machine code created by a compiler but also high-level language code executable by a computer using an interpreter or the like.

Certain aspects of the present disclosure have been described in the context of an apparatus, but such aspects may also represent descriptions in accordance with a corresponding method, where a block or apparatus corresponds to a method step or a feature of a method step. Similarly, aspects described in the context of a method may also be represented as corresponding blocks, items, or features of a corresponding apparatus. Some or all of the method steps may be performed by (or using) a hardware device such as a microprocessor, a programmable computer, or an electronic circuit. In some embodiments, at least one of the most significant method steps may be performed by such a device.

A programmable logic device (for example, a field-programmable gate array) may be used to perform some or all of the functions of the methods described in the present disclosure. A field-programmable gate array may also operate in conjunction with a microprocessor to perform one of the methods described in the present disclosure. In general, it is preferable that the methods be performed by some hardware device.

Terms used in the present disclosure are defined as follows.

"Electric Vehicle (EV)": An automobile, as defined in 49 CFR 523.3, intended for highway use, powered by an electric motor that draws current from an on-vehicle energy storage device, such as a battery, which is rechargeable from an off-vehicle source, such as residential or public electric service or an on-vehicle fuel powered generator.

The EV may include an electric vehicle, an electric automobile, an electric road vehicle (ERV), a plug-in vehicle (PV), an electromotive vehicle (xEV), etc., and the xEV may be classified into a plug-in all-electric vehicle (BEV), a battery electric vehicle, a plug-in electric vehicle (PEV), a hybrid electric vehicle (HEV), a hybrid plug-in electric vehicle (HPEV), a plug-in hybrid electric vehicle (PHEV), etc.

"Plug-in Electric Vehicle (PEV)": An Electric Vehicle that recharges the on-vehicle primary battery by connecting to the power grid.

"Plug-in vehicle (PV)": An electric vehicle rechargeable via wireless charging from an electric vehicle supply equipment (EVSE) without using a physical plug or a physical socket.

"Heavy duty vehicle (H.D. Vehicle)": Any four-or more wheeled vehicle as defined in 49 CFR 523.6 or 49 CFR 37.3 (bus).

"Light duty plug-in electric vehicle": A three or four-wheeled vehicle propelled by an electric motor drawing current from a rechargeable storage battery or other energy devices for use primarily on public streets, roads and highways and rated at less than 4,545 kg gross vehicle weight.

"Wireless power charging system (WCS)": A system for wireless power transfer and control of interactions including operations for an alignment and communications between a ground assembly (GA) and a vehicle assembly (VA).

"Wireless power transfer (WPT)": A transfer of electric power between a power source such as a utility, the power grid, an energy storage device, a fuel cell generator and the EV through a contactless channel such as electromagnetic induction and resonance.

"Utility": A set of systems which supply electrical energy and include a customer information system (CIS), an advanced metering infrastructure (AMI), rates and revenue system, etc. The utility may provide an EV with energy through rates table and discrete events. Also, the utility may provide information related to certification on EVs, interval of power consumption measurements, and tariff.

"Smart charging": A system in which EVSE and/or EV (including the PEV, or PHEV) communicate with power grid to optimize charging ratio or discharging ratio of EV by reflecting capacity of the power grid or expense of use.

"Automatic charging": A procedure in which inductive charging is automatically performed after a vehicle is located in a proper position corresponding to a primary charger assembly which may transfer power by an inductive charging. The automatic charging may be performed after obtaining necessary authentication and right.

"Interoperability": A state in which components of a system interwork with corresponding components of the system to perform operations aimed by the system. Additionally, information interoperability may refer to capability that two or more networks, systems, devices, applications, or components may efficiently share and easily use information without causing inconvenience to users.

"Inductive charging system": A system transferring energy from a power source to an EV via a two-part gapped core transformer in which the two halves of the transformer, i.e., primary and secondary coils, are physically separated from one another. In the present disclosure, the inductive charging system may correspond to an EV power transfer system.

"Inductive coupler": A transformer formed by the primary coil in the primary device or a ground assembly (GA) and the secondary coil in the secondary device or a vehicle assembly (VA) that allows power to be transferred through electric isolation.

"Inductive coupling": A magnetic coupling between two coils. One of the two coils may refer to a GA coil, and the other one of the two coils may refer to a VA coil.

"Ground assembly (GA)": An assembly disposed on the ground or in an infrastructure side including the GA coil and other components. The other components may include at least one part to control the impedance and resonant frequency, a ferrite enforcing the magnetic path, and electromagnetic shielding materials. For example, the GA may include a power/frequency conversion unit and a GA controller necessary to function as a power source of a wireless power charging system, a wiring from the grid, and wirings between each unit, filtering circuits, and a housing.

"Vehicle assembly (VA)": An assembly mounted on the vehicle including the VA coil and other components. The other components may include at least one part to control the impedance and resonant frequency, a ferrite enforcing the magnetic path, and electromagnetic shielding materials. For example, the VA may include a power/frequency conversion unit and a VA controller necessary to as the vehicle part of a wireless power charging system, wiring to the vehicle batteries, and wirings between each unit, filtering circuits, and a housing.

The GA may be referred to as the primary device, or the like, and the VA may be referred to as the EV device, the secondary device, or the like.

The GA may be referred to as the supply device, a power supply side device, or the like, and the VA may be referred to as the EV device, an EV side device, or the like.

"Primary device": An apparatus providing the contactless coupling to the secondary device. The primary device may be an apparatus external to the EV. The primary device may be referred to as a first side device. When the EV is receiving power, the primary device may operate as the source of the power to be transferred. The primary device may include the housing and all covers.

"Secondary device": An apparatus mounted on the EV providing the contactless coupling to the primary device. The secondary device may be provided within the EV. The secondary device may be referred to as a secondary side device. When the EV is receiving power, the secondary device may transfer the power from the primary device to the EV. The secondary device may include the housing and all covers.

"Ground Assembly controller (GA controller)" indicates a portion of the GA regulating an output power level of the GA coil based on information from the vehicle. "Vehicle Assembly controller (VA controller)" indicates a portion of the VA monitoring specific on-vehicle parameters during the charging and initiating communications with the GA to facilitate the adjustment of the output power level.

The GA controller may be used to refer to or a primary device communication controller (PDCC), and the VA controller may be used to refer to an electric vehicle communication controller (EVCC).

"Magnetic gap": A vertical distance between a highest plane of top portion of the litz wire or the top portion of the magnetic material in the GA coil a lowest plane of lower portion of the litz wire or the lowest portion of the magnetic material in the VA coil when they are aligned.

"Ambient temperature": A ground-level temperature of the air measured at a subsystem under consideration and not in direct sun light.

"Vehicle ground clearance": A vertical distance between a ground surface and a lowest part of a vehicle floor pan.

"Vehicle magnetic ground clearance": A vertical distance between the plane of the lower of the bottom of the litz wire or the magnetic material in the secondary coil or VA Coil mounted on the vehicle to the ground surface.

"VA coil magnetic surface distance": A distance between a plane of a nearest magnetic or conducting component surface to a lower external surface of the VA coil when mounted. Such a distance may include any protective coverings and additional items which may be packaged in the VA coil enclosure.

The secondary coil may be referred to as the VA coil, a vehicle coil, or a receiver coil. Similarly, the primary coil may be referred to as the GA coil or a transmit coil.

"Exposed conductive component": A conductive component of electrical equipment (e.g., an electric vehicle) that may be touched, and is not normally energized but may become energized when a fault occurs.

"Hazardous live component": A live component which, under certain conditions, may generate a harmful electric shock.

"Live component": Any conductor or conductive component intended to be electrically energized in normal use.

"Direct contact": A contact of a person with a live component. See IEC 61140 standard.

"Indirect contact": A contact of a person with exposed, conductive, and energized components made live by an insulation failure. See IEC 61140 standard.

"Alignment": A process of finding a relative position of the secondary device with respect to the primary device and/or a relative position of the primary device with respect to the secondary device for an efficient power transfer. In the present disclosure, the alignment may be directed to the alignment in the wireless power transfer system but may not be limited thereto.

"Pairing": A process of associating the vehicle (EV) with a single dedicated supply device (primary device) disposed such that the power transfer may occur. The pairing may include a process of associating the VA controller with the GA controller of the charging spot.

The correlation or association process may include a process of establishing a relationship between two peer communication entities.

"Command and control communications": Communications for exchanging information required for starting, controlling, and ending the wireless power transfer process between an electric vehicle power supply equipment and an electric vehicle.

"High-level communication (HLC)": A digital communication capable of handling all information not covered by the command and control communications. The data link of the HLC may use a power line communication (PLC) but is not limited thereto.

"Low-power excitation (LPE)": A technique of activating the supply device (or primary device) for the fine positioning and pairing so that the EV may detect the supply device, and vice versa.

"Service set identifier (SSID)": A unique identifier including 32-characters attached to a header of a packet transmitted on a wireless LAN. The SSID identifies the basic service set (BSS) to which the wireless device attempts to connect. The SSID distinguishes multiple wireless LANs. Therefore, all access points (APs) and all terminal/station devices that want to use a specific wireless LAN may use the same SSID. Devices that do not use a unique SSID are not able to join the BSS. Because the SSID is shown as plain text, the SSID may not provide any security features to the network.

"Extended service set identifier (ESSID)": A name of the network to which one desires to connect. ESSID is similar to SSID but a more extended concept.

"Basic service set identifier (BSSID)": BSSID including 48bits is used to distinguish a specific BSS. With an infrastructure BSS network, the BSSID may be configured for medium access control (MAC) of the AP equipment. For an independent BSS or Ad-hoc network, the BSSID may be generated with any value.

The charging station may comprise at least one GA and at least one GA controller configured to manage the at least one GA. The GA may comprise at least one wireless communication device. The charging station may refer to a place or location including at least one GA, which is provided in home, office, public place, road, parking area, etc.

In the present specification, "association" may be used as a term representing a procedure for establishing wireless communication between the electric vehicle communication controller (EVCC) and the supply equipment communication controller (SECC) controlling the charging infrastructure.

Meanwhile, one or more conventional components may be included in a configuration of the present disclosure if necessary, and such components will be described herein to an extent that it does not obscure the technical idea and concept of the present disclosure. If the description of the conventional components may obscure the technical idea and concept of the present disclosure, however, detailed description of such components may be omitted for simplicity. On the other hand, some of the description of the conventional components may be replaced by a citation of related prior documents.

Some of the description in the prior documents may be related to the problems to be solved by the present disclosure, but some of the solutions of the present disclosure may also be related with the prior documents.

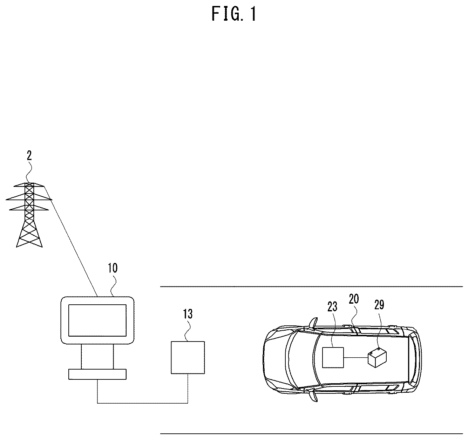

In the following description provided with reference to FIGS. 1-31, technical features that may have been conventional may be omitted or replaced by the citation of related prior documents in order not to obscure the point.

Also, some or all of the description in the prior documents cited above or cited below may be related to the problems to be solved by the present disclosure, and some of the solutions employed in the present disclosure may be adopted from the prior documents.

Some of the technical features disclosed in prior documents and adopted to implement the present disclosure may be considered as part of the configuration of the present disclosure.

Exemplary embodiments of the present disclosure will now be described in detail with reference to the accompanying drawings.

Hereinafter, exemplary embodiments of the present disclosure will be described in more detail with reference to the accompanying drawings. In describing the present disclosure, the same reference numerals are used for the same components in the drawings for convenience of overall understanding, and redundant descriptions of the same components are omitted.

FIG. 1 is a conceptual diagram for explaining a concept of wireless power transfer applied to an electric vehicle (EV), according to an exemplary embodiment of the present disclosure.

Wireless power transfer may be used to transmit power from a charging station to an electric vehicle 20 in order to charge a battery of the electric vehicle 20. Here, wireless power transfer, for example, magnetic field wireless power transfer (MF-WPT), may be defined as delivery of energy via a magnetic field between an electric vehicle supply equipment (EVSE) 10 of the charging station and the electric vehicle 20 without current flow through galvanic connection by conductors.

The EVSE 10 may be configured to receive power from a commercial power grid 2 or a power backbone and supply energy to the electric vehicle 20 through a transmission pad 13. The transmission pad 13 may comprise a transmission coil. The electric vehicle 20 may comprise a reception pad 23 having a reception coil. The transmission coil in the transmission pad 13 may be configured to generate magnetic flux, and may be configured to supply magnetic energy to the electric vehicle 20 through the magnetic flux, or may be configured to supply magnetic energy amplified by magnetic resonance to the electric vehicle 20. The charging station or EVSE 10 may be provided in various locations such as a parking lot attached to a house of an electric vehicle 20 owner, a charging zone in a gas station, or a parking zone of a shopping center or an office building.

The EVSE 10 may be configured to communicate with an infrastructure management system or an infrastructure server managing the power grid 2 through wired/wireless communication. In addition, the EVSE 10 may be configured to perform wireless communication with the electric vehicle 20. Here, the wireless communication may comprise a wireless LAN (WLAN) based on WiFi according to IEEE 802.11 standards. Further, the wireless communication may additionally comprise P2PS communication using a low frequency (LF) magnetic field signal and/or a low power excitation (LPE) signal. For example, the EVSE 10 and the electric vehicle 20 may be configured to perform processes such as pairing, positioning, identification, authentication, service authorization, and payment through WiFi-based communication, and may perform position alignment through P2PS communication. Furthermore, the wireless communication between the EVSE 10 and the electric vehicle 20 may comprise one or more of various communication methods such as Bluetooth, ZigBee, and cellular communication.

The electric vehicle (EV) 20 may comprise a vehicle that may be configured to drive an electric motor using electrical energy stored in a rechargeable energy storage device such as a battery 29 as a power source. The electric vehicle 20 may comprise a hybrid automobile having both an electric motor and a general internal combustion engine, and may include not only an automobile but also a motorcycle, cart, scooter, and electric bicycle.

The electric vehicle 20 may comprise a reception pad 23 having a reception coil for receiving magnetic energy wirelessly from the EVSE 10. The reception coil in the reception pad 23 may be configured to receive magnetic energy, for example, through magnetic flux or magnetic resonance from the transmission coil of the transmission pad 13 in the charging station 10. Due to the magnetic energy received in the electric vehicle 20, an electromotive force is induced in the reception coil of the reception pad 23 and an induced current flows, and the induced current is rectified into a direct current and charges the battery 29.

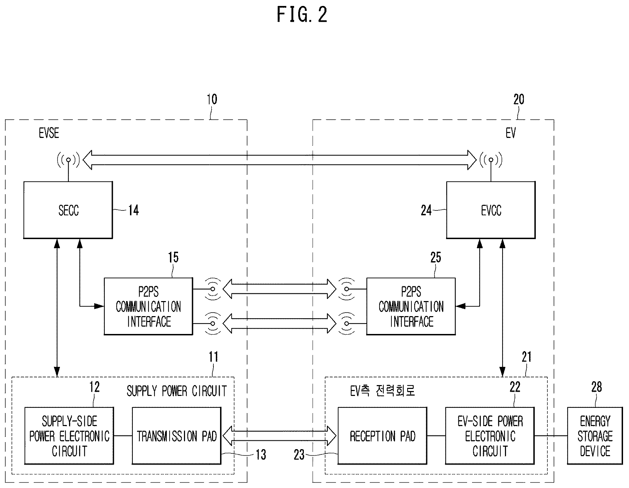

FIG. 2 is a block diagram of a wireless power transfer (WPT) system, according to an exemplary embodiment of the present disclosure. The wireless power transfer system may comprise an electric vehicle supply equipment (EVSE) 10 installed at a charging station and an EV device 20 such as an electric vehicle (hereinafter, the term "EV device" is used instead of "electric vehicle").

The EVSE 10 may comprise a supply power circuit (SPC) 11, a supply equipment communication controller (SECC, 14), and a P2PS communication interface 15. The supply power circuit 11 may be configured to receive supply power from a power grid, form magnetic flux from the supply power, and supply energy to the EV device 20 by magnetic resonance. The supply power circuit 11 may comprise a supply-side power electronic circuit 12 and a primary device, i.e., a transmission pad 13.

The supply-side power electronic circuit 12 may be configured to receive single-phase alternating current power from the power grid and performs a grid interface function that changes a frequency and a voltage level of input voltage and current. The supply-side power electronic circuit 12 may be configured to perform power factor control, regulation, and filtering operations, and may be configured to perform safety actions such as shutdown when necessary. In addition, the supply-side power electronic circuit 12 may be configured to cause resonance to occur between the transmission pad 13 and the EV device 20 so that high power energy may be supplied to the EV device 20 through the transmission pad 13. Furthermore, the supply-side power electronic circuit 12 may be configured to compensate for reactance variations for each vehicle and achieve impedance matching. For example, reactance may vary depending not only on deviations between vehicles but also on height differences or alignment states of a reception pad 23. Reactance compensation may reduce stress of the transmission coil in the transmission pad 13 and reduce losses associated with high inverter current and harmonic generation. The supply-side power electronic circuit 12 may be configured to control an overall operation of the supply power circuit 11 including the transmission pad 13.

The transmission pad 13 may comprise a transmission coil and may be configured to generate a magnetic field from the supply power so that high-level magnetic energy may be transferred to the EV device 20 through magnetic resonance.

The SECC 14, as a higher-layer controller, may be configured to communicate with an EV communication controller (EVCC) 24 of the EV device 20 through a wireless LAN based on WiFi. The SECC 14 and the EVCC 24 may be configured to perform application-layer communication of the WPT system according to the ISO 15118-20 standard to perform processes such as pairing, positioning, identification, compatibility verification, authentication, service authorization, and payment. Physical and data link layers of the WLAN link may be configured to comply with the ISO 15118-8 standard. In addition, the SECC 14 may be configured to control the supply power circuit 11 so that wireless power transfer from the EVSE 10 to the EV device 20 is performed smoothly and precisely. Furthermore, the SECC 14 may be configured to control the P2PS communication interface 15.

The P2PS communication interface 15 may be configured to perform P2PS communication with the EV device 20 under the control of the SECC 14. In the present specification including claims, P2PS communication refers to communication for transmitting and receiving signals for charging using a low frequency (LF) magnetic field signal and/or a low power excitation (LPE) signal. P2PS communication may be used for vehicle positioning and/or position alignment between the transmission pad 13 and the reception pad 23.

Meanwhile, the EV device 20 may comprise an EV power circuit (EVPC) 21, an EV communication controller EVCC) 24, and a P2PS communication interface 25. The EV power circuit 21 may be configured to receive magnetic energy in the form of flux variation from the supply power circuit 11 of the EVSE 10, convert the received magnetic energy into an induced current, rectify the induced current into direct current, and charge a battery (29, see FIG. 1) in an energy storage device 28. The EV power circuit 21 may comprise an EV-side power electronic circuit 22 and a secondary device, i.e., a reception pad 23.

The reception pad 23 may comprise a reception coil and may be configured to capture flux variations induced from the transmission pad 13, thereby receiving high-level magnetic energy supplied, for example, in a magnetic resonance state.

The EV-side power electronic circuit 22 may be configured to receive power from the reception pad 23, which has received power from the transmission pad 13, and change a frequency and a voltage level. The EV-side power electronic circuit 22 may be configured to rectify and filter the power received through the reception pad 23. The EV-side power electronic circuit 22 may be configured to perform regulation operations and perform safety measures such as shutdown when necessary. In addition, the EV-side power electronic circuit 22 may be configured to compensate for reactance variations at the reception pad 23 and achieve impedance matching.

The EVCC 24, as a higher-layer controller, may be configured to communicate with the SECC 14 in the EVSE 10 through a wireless LAN based on WiFi. The EVCC 24 may be configured to perform application-layer communication of the WPT system according to the ISO 15118-20 standard. The physical and data link layers of the WLAN link may be configured to comply with the ISO 15118-8 standard. In addition, the EVCC 24 may be configured to control the EV power circuit 21 so that reception of power from the EVSE 10 is performed smoothly and precisely. Furthermore, the EVCC 24 may be configured to control the P2PS communication interface 25.

The P2PS communication interface 25 may be configured to perform P2PS communication with the EVSE 10 under the control of the EVCC 24. In the present specification including claims, P2PS communication refers to communication for transmitting and receiving signals for charging using LF magnetic field signals and/or LPE signals. P2PS communication may be used for vehicle positioning and/or position alignment between the transmission pad 13 and the reception pad 23.

According to one embodiment, the P2PS communication interfaces 15 and 25 may be configured to support at least one type of P2PS interface among LF signals or LPE signals. Each type of P2PS interface may comprise a unidirectional P2PS interface. The LF signal is a digitally modulated magnetic field having a frequency belonging to an ultra-low frequency and low frequency band (i.e., LF and VLF band of 3 kHz to 300 kHz) among radio bands defined by the International Telecommunication Union (ITU). According to an exemplary embodiment, the LF signal may be transmitted by the P2PS communication interface 25 of the EV device 20 and received by the P2PS communication interface 15 of the EVSE 10. To this end, the P2PS communication interface 25 of the EV device 20 may comprise an LF transmitter, and the P2PS communication interface 15 of the EVSE 10 may comprise an LF receiver. Meanwhile, the LPE signal may be transmitted by the P2PS communication interface 15 of the EVSE 10 and received by the P2PS communication interface 25 of the EV device 20. To this end, the P2PS communication interface 15 of the EVSE 10 may comprise an LPE transmitter, and the P2PS communication interface 25 of the EV device 20 may comprise an LPE receiver.

According to an exemplary embodiment of the present disclosure, a ground assembly (GA) may be used in the same meaning as the transmission pad 13. The ground assembly or the transmission pad 13 essentially may comprise a primary device, i.e., a transmission coil. However, in a modified embodiment, the ground assembly and the transmission pad 13 may be used in different meanings. The ground assembly or the transmission pad 13 may further comprise at least one of an LPE transmitter, an LF receiver, and at least part of the supply-side power electronic circuit 12 in addition to the transmission coil.

The ground assembly or transmission pad 13 may be installed to protrude upward from the ground at a charging spot of the charging station so as to be at least partially exposed. In another example, an upper surface of the ground assembly or transmission pad 13 may be installed flush with an extension plane of the ground. In yet another example, the ground assembly or transmission pad 13 may be installed buried under the ground.

According to an exemplary embodiment of the present disclosure, a vehicle assembly (VA) may be used in the same meaning as the reception pad 23. The vehicle assembly or the reception pad 23 essentially may comprise a secondary device, i.e., a reception coil. However, in a modified embodiment, the vehicle assembly and the reception pad 23 may be used in different meanings. The vehicle assembly or the reception pad 23 may further comprise at least one of an LPE receiver, an LF transmitter, and at least part of the EV-side power electronic circuit 22 in addition to the reception coil. The vehicle assembly or the reception pad 23 may be installed at a lower portion of a vehicle.

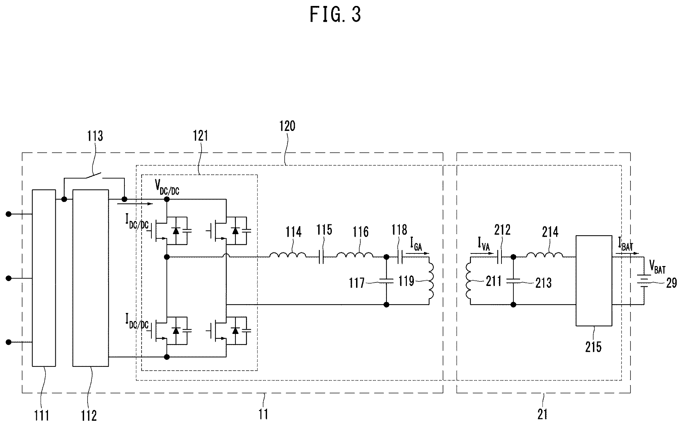

FIG. 3 is a circuit diagram illustrating a wireless charging device. The wireless charging device shown in FIG. 3 illustrates a structure of the present disclosure for a high-capacity electric vehicle wireless charging system of 22 kW or higher.

As shown in FIG. 3, the wireless charging device may comprise a three-phase power factor correction circuit (hereinafter referred to as PFC) 111, a DC-DC converter (or buck converter) 112, and an inductive power transfer device (hereinafter referred to as IPT device) 120. The IPT device 120 may comprise a part of the supply power circuit 11 and a part of the EV power circuit 21.

The three-phase PFC 111 may be configured to receive an industrial three-phase alternating current power as an input, and perform a direct current voltage generation and a power factor correction function required for battery charging.

The DC-DC converter 112 may be configured to receive an output of the three-phase PFC 111 as an input and perform vehicle-internal battery charging control. An output of the DC-DC converter 112 is input to an inverter of 85 kHz, and delivers power to the battery 29 through a primary-side impedance compensator, transmission and reception pads (transmission and reception coils), a secondary-side impedance compensator mounted in the vehicle, and a rectifier.

In the present disclosure, the structure of FIG. 3, in which the DC-DC converter 112 is installed on the ground, is described in order to reduce the size and weight of hardware mounted on a vehicle. However, depending on design, the DC-DC converter 112 may be disposed inside the vehicle.

As such, a direct current, which is an output of the DC-DC converter 112, may be reconverted into a high-frequency alternating current through an inverter 121, passes through a filter including a filtering inductor 114 and a filtering capacitor 115 to remove unnecessary harmonic components, and passes through a matching network including a first matching inductor 116, a first parallel capacitor 117, and a first series capacitor 118 to be adjusted to a predetermined resonance frequency. Thereafter, a magnetic field may be generated through a supply-side coil 119.

Such a magnetic field induces an electromotive force in an EV-side coil 211, which is an EV-side power circuit 21, and after passing through a matching network including a second series capacitor 212, a second parallel capacitor 213, and a second matching inductor 214, the resonance frequency is adjusted, and then the induced power is rectified by a rectifier 215 into direct current and charges the battery 29.

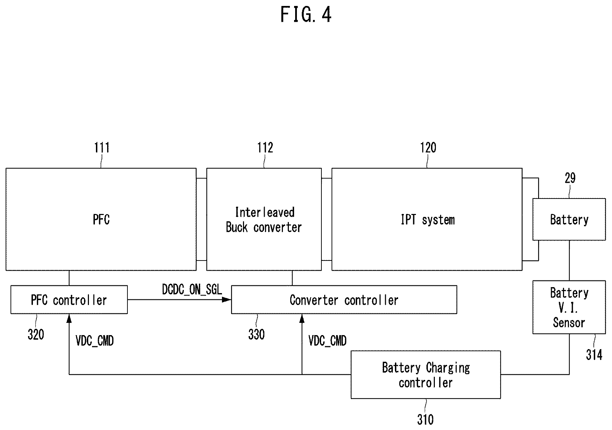

FIG. 4 is a block diagram illustrating a wireless charging system, according to an exemplary embodiment of the present disclosure.

As shown in FIG. 4, the wireless charging system, according to an exemplary embodiment of the present disclosure, may be configured to charge a battery 29 by sequentially controlling a power factor correction circuit (PFC), 111, a DC-DC converter 112, and an inductive power transfer (IPT) device 120, and may comprise a battery charging controller 310, a PFC controller 320, and a converter controller 330. The wireless charging system may further comprise a bypass switch 113 of FIG. 3 for directly connecting the PFC and the IPT device by bypassing the DC-DC converter 112.

For example, such a wireless charging system may be provided in an electric vehicle supply equipment (EVSE).

A battery voltage and current sensor 314 may be configured to sense a voltage value and a current value of the battery 29. The battery voltage and current sensor 314 may be provided, for example, in the electric vehicle.

The battery charging controller 310 may be configured to receive the sensed current value and voltage value from the electric vehicle. Based on the received voltage and current values, the battery charging controller 310 may be configured to generate a charging control signal (VDC_CMD). The battery charging controller 310 may be configured to determine a charging state of the battery 29 by comparing the sensed voltage and current values with reference values.

The PFC controller 320 may be configured to control a switching operation of the PFC circuit 111 to adjust a DC bus voltage supplied to the DC-DC converter 112 based on the charging control signal (VDC_CMD), and output a converter enable signal (DCDC_ON_SGL).

The converter controller 330 may be configured to control switching of the DC-DC converter 112 based on the converter enable signal (DCDC_ON_SGL) and the charging control signal (VDC_CMD). The converter controller 330 may be configured to adjust a duty ratio of the DC-DC converter 112 based on the charging control signal (VDC_CMD) and the converter enable signal (DCDC_ON_SGL).

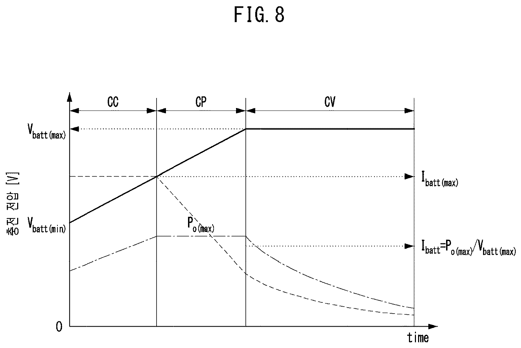

More specifically, when a battery voltage value of the battery 29 is lower than a first threshold value, the duty ratio of the DC-DC converter 112 may be controlled to be increased, and when the battery voltage value is higher than a second threshold value, the duty ratio of the DC-DC converter 112 is controlled to be decreased. That is, the duty ratio of the DC-DC converter 112 may be controlled to be increased in an initial charging period when the battery voltage is relatively low, and to be decreased in a later charging period when the battery voltage approaches a target voltage. Through such operation, as shown in FIG. 8, charging may be performed in a constant current (CC) mode, a constant power (CP) mode, and a constant voltage (CV) mode over time.

In the CC mode, which is an initial charging period in which the voltage of the charging battery 29 is low, charging may be performed at a constant current, thereby rapidly raising the battery voltage. Thereafter, charging may be performed in the CP mode. As the voltage of the battery 29 gradually increases, when charging is performed at a constant current, charging power (P=VI) may rapidly increase. Therefore, charging may be controlled by dynamically adjusting current and voltage so that the charging power is maintained at a constant level. Thereafter, charging may be performed in the CV mode. In a late charging period (80% or more state of charge), when the battery voltage approaches a target value, charging may be performed while maintaining the voltage constant, and the current is gradually decreased. This prevents overcharging of the battery 29, ensures a lifetime of the battery 29, and improves safety.

To this end, the converter controller 330 may be configured to selectively operate the bypass switch 113 of FIG. 3 according to a charging state of the battery 29. More specifically, the converter controller 330 may be configured to operate the bypass switch 113 of FIG. 3 when a sensed battery voltage substantially matches an output voltage of the IPT device 120.

The battery charging controller 310 may be configured to control whether the converter enable signal (DCDC_ON_SGL) is activated according to a charging state of the battery 29. More specifically, the converter enable signal (DCDC_ON_SGL) may be deactivated in an initial charging period when the battery voltage is below a reference voltage, and may be activated in a charging period when the battery voltage has increased to be equal to or higher than the reference voltage.

The battery charging controller 310 may be configured to determine a maximum charging power condition and adjust the charging control signal (VDC_CMD) accordingly. More specifically, the maximum charging power condition may be determined when a battery current reaches a predetermined limit current or when an output power of the IPT device 120 reaches a predetermined limit power, and the charging control signal (VDC_CMD) may be adjusted so that charging current is limited when the maximum charging power condition is satisfied.

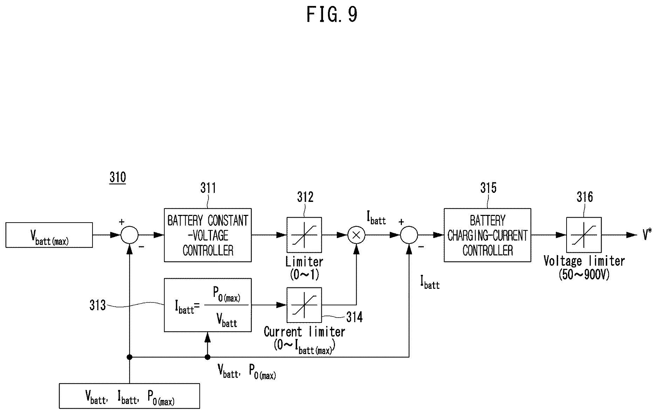

Detailed operations of the respective components will be described in more detail with reference to FIGS. 9 to 11B.

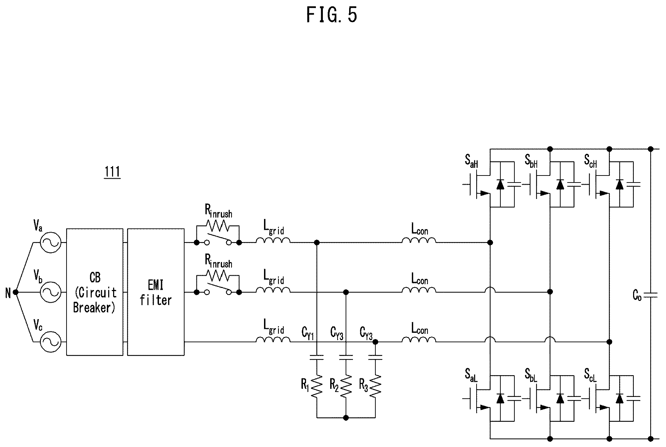

FIG. 5 is a circuit diagram illustrating the power factor correction (PFC) circuit shown in FIG. 4.

As disclosed in FIG. 5, as the PFC 111 of FIG. 4, a three-phase power factor correction circuit employing a two-level rectifier may be adopted. The PFC 111 of FIG. 5 may be configured to comprise, in large part, an input section, a protection and filtering section, and a PFC control section.

The input section may comprise three-phase alternating current input lines of Va, Vb, and Vc, a circuit breaker (CB), and an EMI filter. Through the three-phase alternating current input lines of Va, Vb, and Vc, three-phase alternating current is input. The circuit breaker (CB) interrupts a circuit in an abnormal state such as overcurrent or short circuit to protect a system. The EMI filter suppresses electromagnetic interference so as to prevent noise from being emitted to the outside and to block external noise from entering the system.

The protection and filtering section may comprise an inrush current limiting resistor Rinrush, an input reactor Lgrid, Y-capacitors CY1, CY2, and CY3, and discharge resistors R1, R2, and R3. The limiting resistor Rinrush may be configured to limit a large inrush current generated at startup to prevent circuit damage, and may be removed through a bypass switch after initial charging is completed. The input reactor Lgrid may be configured to improve a power factor by correcting a current waveform to be close to a sine wave. The Y-capacitors CY1, CY2, and CY3 are capacitors connected between respective phases and ground, and may be configured to suppress EMI by allowing high-frequency noise to flow to ground. The discharge resistors R1, R2, and R3 may be configured to discharge charges accumulated in the Y-capacitors CY1, CY2, and CY3 to improve safety.

The PFC control section may comprise a boost inductor Lcon, upper switches SaH, SbH, and ScH, lower switches SaL, SbL, and ScL, and a DC link capacitor Co. The boost inductor Lcon, as a core inductor that controls current, may be configured to maintain a direct-current bus voltage stably while operating with switching elements. The upper switches SaH, SbH, and ScH may be turned on and off according to PWM signals and may be configured to perform current control. The lower switches SaL, SbL, and ScL may be configured to operate in a two-level three-phase PFC or an interleaved scheme to reduce current ripple and achieve high efficiency. The DC link capacitor Co may be configured to stores power output from the PFC circuit to stabilize a direct-current bus voltage and supplies the stabilized direct-current bus voltage as an input to the DC-DC converter 112 of FIG. 4.

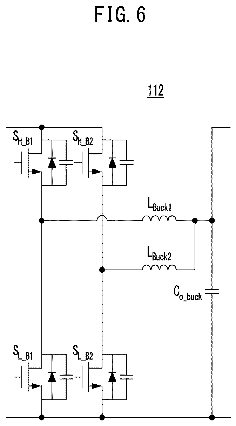

FIG. 6 is a circuit diagram illustrating the DC-DC converter (buck converter) shown in FIG. 4.

As disclosed in FIG. 6, as the DC-DC converter of FIG. 4, a buck converter performing two-phase interleaving operation may be adopted. The DC-DC converter 112 of FIG. 6 receives the output of the PFC 111 as an input and outputs a charging voltage of a capacitor Co_buck, which is lower than the input voltage. More specifically, when an upper switch SH is turned on, current flows through an inductor Lbuck and energy is stored, and when the upper switch SH is turned off and a lower switch SL is turned on, energy stored in the inductor may be released to deliver power to the capacitor Co_buck. In this case, a ratio of an ON time of the upper switch (D = TON / Ttotal) determines a magnitude of an output voltage. More specifically, an average output voltage may be expressed as a product of an input voltage and a duty ratio.

In addition, the inductors Lbuck1 and Lbuck2 may be configured to smooth voltage and current waveforms generated by switching operations so that current flows continuously, whereby an output current may be maintained smoothly. As such, by using two buck converter phases (Lbuck1 and Lbuck2) and driving the phases with a phase shift relative to each other, current ripple is reduced, output stability is increased, and heat generation is distributed.

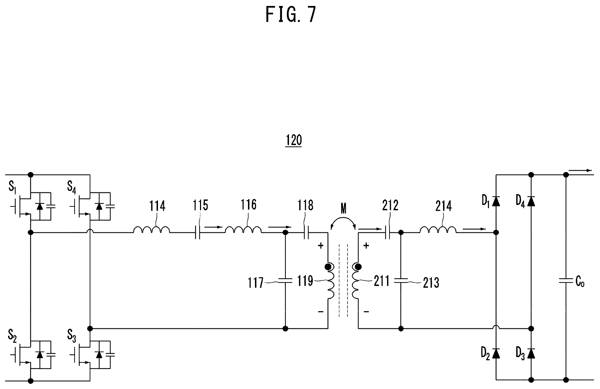

FIG. 7 is a circuit diagram illustrating the IPT device shown in FIG. 4.

As disclosed in FIG. 7, wireless power delivery may be configured to use an inverter and a rectifier operating at 85 kHz with an LCC-CCL impedance compensator. With respect to FIG. 7, detailed descriptions are as previously provided with reference to FIG. 3, and redundant descriptions are omitted.

FIG. 8 is a graph illustrating a constant current-constant power-constant voltage charging method of a battery.

FIG. 8 shows a general method for charging a battery mounted in an electric vehicle. As described above, in the present disclosure, the wireless charging system may be configured to operate in such a manner that, as shown in FIG. 8, charging is performed in a constant current (CC) mode when the battery is heavily discharged, charging is then performed in a constant power (CP) mode from when a battery voltage level reaches a maximum power level, and charging is performed in a constant voltage (CV) mode from when the battery voltage level reaches a maximum voltage level.

FIG. 9 is a block diagram illustrating the battery charging controller shown in FIG. 4.

FIG. 9 shows a control algorithm that implements FIG. 8. The battery charging controller 310 may be configured to receive current information of the electric vehicle battery from an EMS (Energy Management System) or a BMS (battery management system) inside a vehicle [battery voltage Vbatt, battery charging current Ibatt, maximum battery charging voltage Vbatt(max), maximum battery charging power Po(max)] and generates a charging control signal V*. To this end, a battery constant-voltage controller 311 compares a current battery voltage Vbatt with a target maximum voltage Vbatt(max) and outputs a voltage control signal, and this signal passes through a limiter 312 limited to a range of 0 to 1 and contributes to generation of a current command.

Meanwhile, a calculator 313 may be configured to calculate a target current (Ibatt = Po(max)/Vbatt) based on the maximum charging power Po(max) and the battery voltage Vbatt, and a current limiter 314 limits a battery charging current so that the battery charging current does not exceed a maximum charging current Ibatt(max). The current command thus calculated may be multiplied by an output of the limiter 312 to form a target charging current Ibatt*, and the target charging current Ibatt* may be compared with an actual battery charging current Ibatt. A battery charging-current controller 315 may be configured to compensate for a difference between the target charging current Ibatt* and the actual current Ibatt and output the charging control signal V*, and this signal passes through a voltage limiter 316 limited to a range of 50 V to 900 V and is finally output. Accordingly, the battery charging controller 310 may be configured to enable stable and efficient charging of the battery by controlling conversion so that charging modes are switched among constant current, constant power, and constant voltage according to a battery state.

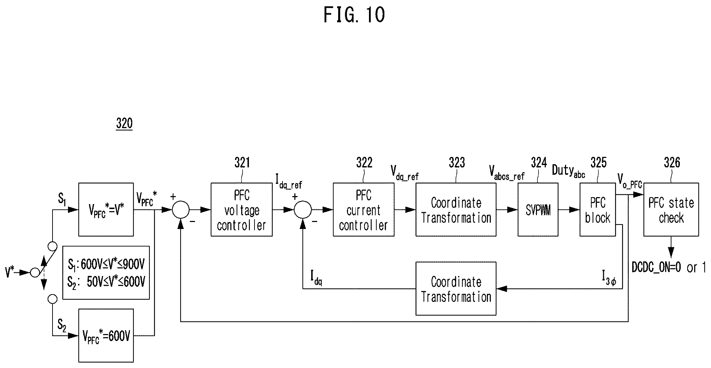

FIG. 10 is a block diagram illustrating the PFC controller shown in FIG. 4.

As shown in FIGS. 4 and 10, the PFC controller 320 may be configured to receive a charging control signal V* output from the battery charging controller 310 as an input, and generates a voltage command VPFC* for controlling a direct-current output voltage of the power factor correction circuit (PFC), 111. First, switches S1 and S2 may be configured to selectively operate according to a magnitude of the input control signal V*. Specifically, when V* is between 600 V and 900 V, switch S1 may be selected and VPFC* is set to V*. When V* is between 50 V and less than 600 V, switch S2 may be selected and VPFC* is fixed to 600 V.

The voltage command VPFC* thus set is delivered to a PFC voltage controller 321 and compared with a PFC output voltage Vo_PFC. The voltage controller 321 may be configured to compensate for a voltage error to generate a dq-axis current command Idq_ref. The generated current command Idq_ref is delivered to a PFC current controller 322 and compared with an actual dq-axis current Idq, from which a dq-axis voltage command Vdq_ref is calculated.

The dq-axis voltage command Vdq_ref may be converted into an abc-axis voltage command Vabc_ref through a coordinate transformation block 323, and then converted into duty ratios Duty_abc for driving switching elements through a space vector PWM (SVPWM) module 324. The duty ratios Duty_abc may be delivered to a PFC block 325 to control three-phase currents I3φ and an output voltage Vo_PFC of the PFC circuit. The actual three-phase currents I3φ may be again converted into dq-axis currents Idq through the coordinate transformation block and fed back.

Meanwhile, the PFC output voltage Vo_PFC passes through a status checking block 326 where normal operation is determined. When the PFC circuit normally operates and generates a target voltage, a converter operation enable signal DCDC_ON is set to "1." Otherwise, it is set to "0" to control whether the DC-DC converter 112 operates.

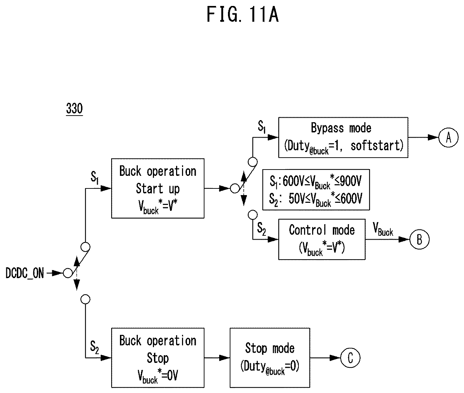

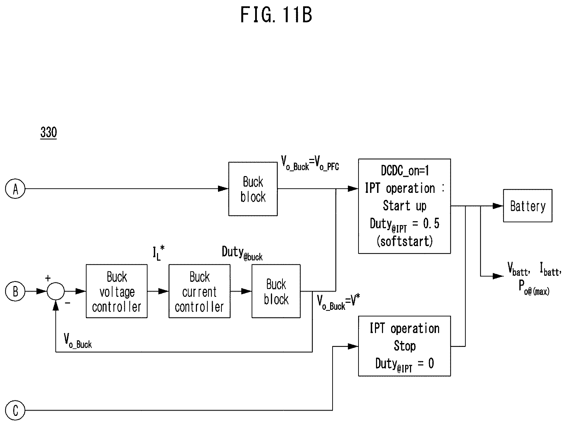

FIGS. 11A and 11B are block diagrams illustrating the converter and charging system controller shown in FIG. 4.

As shown in FIGS. 4, 11A, and 11B, a converter controller 330 may be configured to receive the control signal V* output from the battery charging controller 310 and the converter operation enable signal DCDC_ON from the PFC controller 320 as inputs, and may be configured to control operation of the DC-DC converter 112 and the IPT device 120.

Specifically, when the control signal V* output from the battery charging controller 310 is 600 V or higher, and simultaneously the converter operation enable signal DCDC_ON is activated as "1," the converter controller 330 may be configured to bypass the DC-DC converter 112 and directly deliver an output voltage (600 V) of the PFC circuit 111 to the IPT device 120. At this time, the IPT device 120 may be configured to charge the battery 29 based on the direct-current output voltage of the PFC circuit 111, and voltage conversion loss by the DC-DC converter 112 may be removed, thereby improving charging efficiency.

On the other hand, during a battery charging process, when control for lowering charging current is required, such as in a constant power (CP) or constant voltage (CV) charging mode, the battery charging controller 310 may be configured to output a control voltage V* lower than 600 V. Accordingly, the converter controller 330 may be configured to fix the output voltage of the PFC circuit to 600 V while activating the DC-DC converter 112 so that the converter output follows the control signal V*. Thus, a battery charging current may be adjusted to match a target current, and the constant-current, constant-power, and constant-voltage charging profile is stably carried out.

Accordingly, the converter controller 330 may be configured to determine and control whether to bypass the DC-DC converter 112 depending on a charging stage and a state of the battery 29, thereby ensuring both charging efficiency and charging stability. Through the charging converter, V* is reduced so that the battery charging current enables the constant-current and constant-voltage charging as shown in FIG. 8.

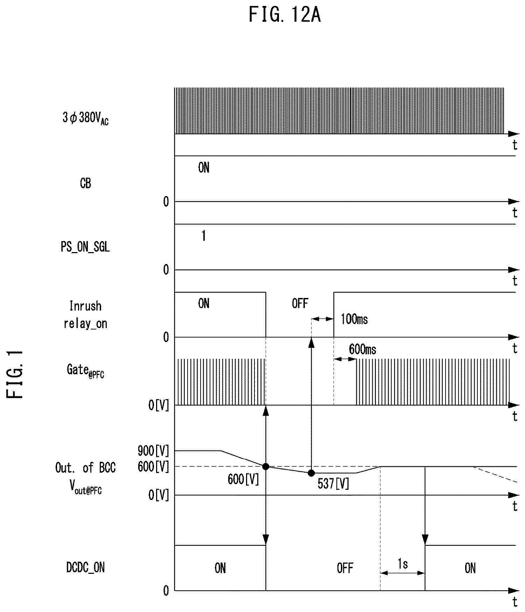

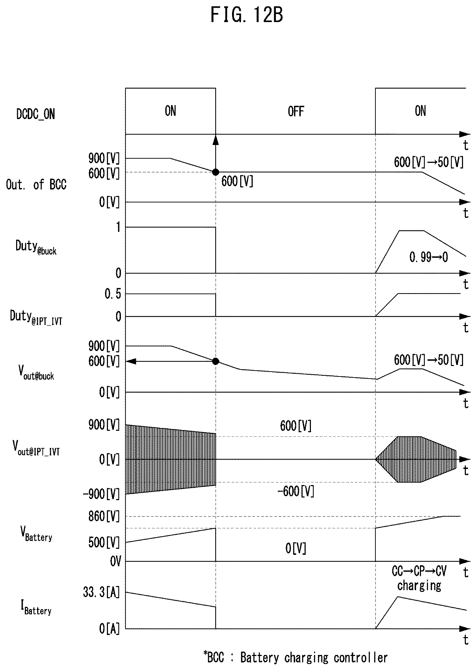

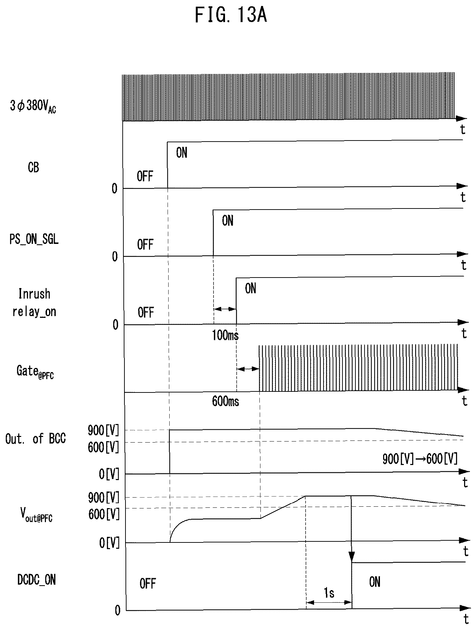

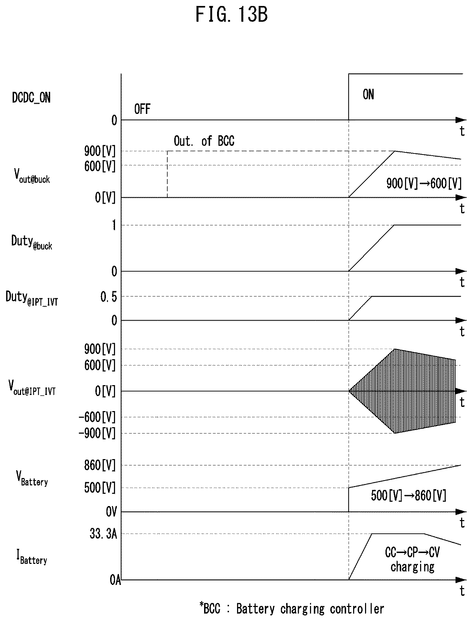

FIGS. 12A and 12B illustrate an operation mode sequence in which a bypass switch of FIG. 3 is turned off in the DC-DC converter (buck converter) of the wireless charging system shown in FIG. 4, and FIGS. 13A and 13B are a bypass mode operation sequence in which the bypass switch of FIG. 3 is turned on in the DC-DC converter (buck converter) of the wireless charging system shown in FIG. 4.

In FIGS. 12A and 12B, when the bypass switch 113 of FIG. 3 is turned off, an output of the three-phase PFC 111 may be input into the DC-DC converter 112, and the DC-DC converter 112 may be configured to finely control voltage and current according to a state of the battery. This case corresponds to an initial stage of battery charging when a difference between an output of the IPT device 120 and a required voltage of the battery 29 is large and precise control is required for stable charging. After the output of the three-phase PFC 111 is input to the DC-DC converter 112 and then supplied to the IPT device 120, a voltage of a secondary side of the IPT device 120 differs from the output of the PFC 111. In addition, waveforms of duty ratios dynamically change, confirming that power control is actively performed.

FIGS. 13A and 13B show a case in which the bypass switch 113 of FIG. 3 is turned on so that the output of the three-phase PFC 111 is directly supplied to the IPT device 120 without passing through the DC-DC converter 112. In this case, since the DC-DC converter 112 is omitted, conversion loss is reduced, resulting in a high-efficiency mode. When a required voltage of the battery has little difference from a direct-current bus voltage output of the PFC, unnecessary conversion may be omitted and system efficiency may be maximized. As the output of the three-phase PFC 111 is input to the IPT device 120 without passing through the DC-DC converter 112, it can be confirmed that a secondary side voltage of the IPT (battery input voltage) is almost identical to the output voltage of the PFC 111, and that variation of duty ratios is almost absent.

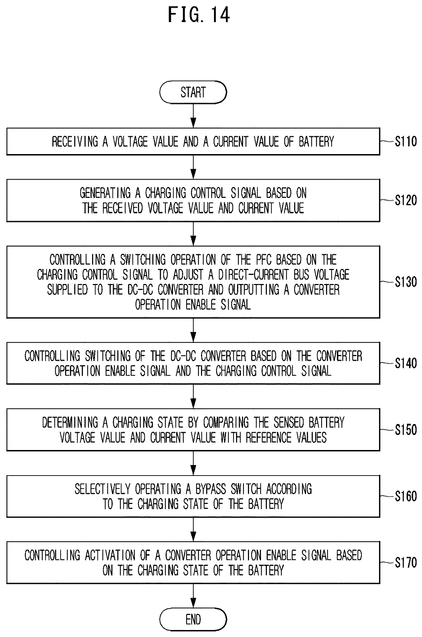

FIG. 14 is a flowchart illustrating a control method of the wireless charging system shown in FIG. 4.

As shown in FIG. 14, the control method of the wireless charging system, according to an exemplary embodiment of the present disclosure, may comprise a control method of a wireless charging system that charges a battery by controlling a power factor correction (PFC) circuit, a DC-DC converter, and an inductive power transfer (IPT) device sequentially connected, and includes: receiving a voltage value and a current value of the battery, which are sensed through a battery voltage and current sensor (S110); generating a charging control signal based on the received voltage value and current value (S120); controlling a switching operation of the PFC based on the charging control signal to adjust a direct-current bus voltage supplied to the DC-DC converter and outputting a converter operation enable signal (S130); and controlling switching of the DC-DC converter based on the converter operation enable signal and the charging control signal (S140).

The control method of the wireless charging system may further comprise determining a charging state by comparing the sensed battery voltage value and current value with reference values (S150).

Switching control of the DC-DC converter may comprise control for adjusting a switching duty ratio based on the charging control signal and the converter operation enable signal. More specifically, the switching duty ratio may be controlled such that when the battery voltage value is lower than a first threshold value, the duty ratio of the DC-DC converter increases, and when the battery voltage value is higher than a second threshold value, the duty ratio decreases.

The control method of the wireless charging system may further comprise selectively operating a bypass switch for directly connecting the PFC and the IPT device by bypassing the DC-DC converter according to the charging state of the battery (S160). More specifically, in the selectively operating of the bypass switch, when the sensed battery voltage value substantially matches an output voltage value of the IPT device, the bypass switch may be driven.

The control method of the wireless charging system may further comprise controlling activation of a converter operation enable signal based on the charging state of the battery (S170). More specifically, the converter operation enable signal may be deactivated in an initial charging stage when a battery voltage is equal to or lower than a reference voltage, and may be activated in a charging stage when a battery voltage has risen to be equal to or higher than the reference voltage.

In the charging control signal generating step, a maximum charging power condition may be determined, and charging power may be adjusted according to a determination result. At this time, the maximum charging power condition may be determined when battery current reaches a predetermined limit current or output power of the IPT device reaches a predetermined limit power.

In FIG. 14, steps S150, S160, and S170 are all illustrated, but they are not essential and are optional. Meanwhile, since each method has been previously described in detail, redundant descriptions are omitted.

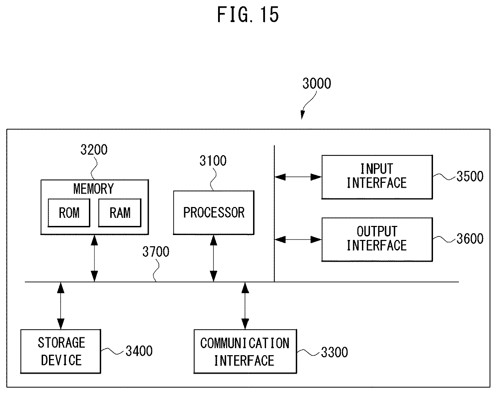

FIG. 15 is a block diagram illustrating a generalized configuration for performing a control method of a wireless charging system according to an exemplary embodiment of the present disclosure.

Referring to FIG. 15, a computing system 3000, according to an exemplary embodiment of the present disclosure, may comprise at least one processor 3100 and a memory 3200. The memory 3200 may be configured to store instructions that, when executed by the at least one processor 3100, are configured to cause the at least one processor 3100 to perform at least one step of FIG. 14. At least some of the steps of the method, according to an exemplary embodiment of the present disclosure, may be performed by the at least one processor 3100 loading and executing instructions from the memory 3200.

The processor 3100 may comprise a central processing unit (CPU), a graphics processing unit (GPU), or a dedicated processor on which methods according to exemplary embodiments of the present disclosure are performed. The memory 3200 and a storage device 3400 may each be composed of at least one of a volatile storage medium and a non-volatile storage medium. For example, the memory 3200 may include at least one of a read only memory (ROM) and a random access memory (RAM).

The computing system 3000 may further comprise a communication interface 3300 performing communication through a wired/wireless network. The computing system 3000 may further comprise the storage device 3400, an input interface 3500, an output interface 3600, and the like. Each component included in the computing system 3000 may be connected by a bus 3700 to perform mutual communication.

A device comprising the processor 3100, according to an exemplary embodiment of the present disclosure, may comprise, for example, a communicable desktop computer, laptop computer, notebook, smart phone, tablet PC, mobile phone, smart watch, smart glass, e-book reader, portable multimedia player (PMP), portable game console, navigation device, digital camera, digital multimedia broadcasting (DMB) player, digital audio recorder, digital audio player, digital video recorder, digital video player, and personal digital assistant (PDA).

A device for controlling power transfer or determining operating conditions, according to an exemplary embodiment of the present disclosure, may be installed on a vehicle side and/or charging station side in connection with an electric vehicle charging system, an electric vehicle supply equipment (EVSE), and/or a charging manipulator, and may include a processor 3100 that receives and executes at least one command from the memory 3200. The processor 3100 of a device for charging an electric vehicle according to an exemplary embodiment of the present disclosure may perform a method executed by a computing system or controller on a charging station side in cooperation with an EVSE including a charging manipulator. The processor 3100 of a device for charging an electric vehicle according to an exemplary embodiment of the present disclosure may perform a method executed by a computing system or controller on a vehicle side.

The operation of the method according to an exemplary embodiment of the present disclosure may be implemented as a program or code readable by a computer on a computer-readable recording medium. The computer-readable recording medium includes all kinds of recording devices in which information readable by a computer system is stored. The computer-readable recording medium may be distributed in a computer system connected via a network so that a program or code readable by a computer is stored and executed in a distributed manner. The computer-readable recording medium may include hardware devices specially configured to store and perform program instructions, such as ROM, RAM, and flash memory. The program instructions include not only machine code generated by a compiler but also high-level language code executable by a computer using an interpreter and the like.

Some aspects of the present disclosure have been described in the context of a device, but this may also represent descriptions according to a corresponding method, where a block or device corresponds to a method step or a feature of a method step. Similarly, aspects described in the context of a method may also be represented as a corresponding block, item, or feature of a corresponding device. Some or all of the method steps may be performed by (or using) a hardware device such as a microprocessor, programmable computer, or electronic circuit. In some exemplary embodiments, at least one of the most important method steps may be performed by such a device. In exemplary embodiments, a programmable logic device (for example, a field-programmable gate array (FPGA)) may be used to perform some or all of the functions of the methods described herein. In exemplary embodiments, the FPGA may operate together with a microprocessor to perform one of the methods described herein. Generally, the methods are preferably performed by a hardware device.

As described above, the wireless charging system according to the present disclosure may robustly perform battery charging even when a matching state between transmission and reception coils varies, by organically operating a battery charging controller, a PFC controller, and a converter controller. Specifically, the battery charging controller automatically controls execution of a constant current (CC), constant power (CP), and constant voltage (CV) charging profile based on battery voltage, current, and maximum charging power so that charging characteristics remain stable even if the IPT output fluctuates. In addition, the PFC controller controls a direct-current bus voltage in a 600 V fixed manner or in a target voltage (V*) tracking manner according to the battery charging state, thereby enabling stable voltage supply even if the IPT output fluctuates due to variation of coil coupling. Furthermore, the converter controller activates or bypasses the DC-DC converter according to the battery state, such that when a difference between the IPT output voltage and the required voltage of the battery is large, precise voltage control is performed, and when the voltages substantially match, conversion loss is minimized to enable high-efficiency charging.

Accordingly, the wireless charging system according to the present disclosure may guarantee stable and efficient battery charging regardless of positional errors and matching variations between the transmission and reception coils.

The description of the disclosure is merely exemplary in nature and, thus, variations that do not depart from the substance of the disclosure are intended to be within the scope of the disclosure. Such variations are not to be regarded as a departure from the spirit and scope of the disclosure. Thus, it will be understood by those of ordinary skill in the art that various changes in form and details may be made without departing from the spirit and scope as defined by the following claims.

## Claims

1. A wireless charging system for charging a battery, comprising:
a computing device, comprising a processor and a memory, configured to:
receive a voltage value and a current value of the battery,
wherein the voltage value and the current value are sensed through a battery voltage and current sensor;
generate a charging control signal based on the received voltage value and current value;
control a switching operation of a sequentially connected power factor correction (PFC) circuit to:
regulate a direct-current bus voltage supplied to a DC-DC converter based on the charging control signal; and
output a converter enable signal; and
control a switching operation of the DC-DC converter based on the converter enable signal and the charging control signal.

2. The wireless charging system of claim 1, wherein the computing device is configured to determine a charging state of the battery based on the sensed voltage value, the sensed current value, and reference values.

3. The wireless charging system of claim 1 or 2, wherein the computing device is configured to adjust a duty ratio of the DC-DC converter based on the charging control signal and the converter enable signal.

4. The wireless charging system of claim 3, wherein the computing device is configured to:
increase the duty ratio of the DC-DC converter when the battery voltage value is lower than a first threshold value; and
decrease the duty ratio of the DC-DC converter when the battery voltage value is higher than a second threshold value.

5. The wireless charging system of anyone of claims 1-4, further comprising a bypass switch configured to directly connect the PFC and an inductive power transfer (IPT) device by bypassing the DC-DC converter,
wherein the computing device is configured to control the bypass switch based on a charging state of the battery.

6. The wireless charging system of claim 5, wherein the computing device is configured to drive the bypass switch when the sensed battery voltage value substantially matches an output voltage value of the IPT device.

7. The wireless charging system of anyone of claims 1-6, wherein the computing device is configured to control activation of the converter enable signal according to a charging state of the battery.

8. The wireless charging system of claim 7, wherein the computing device is configured to:
deactivate the converter enable signal when the received battery voltage value is equal to or less than a reference voltage; and
activate the converter enable signal when the received battery voltage value rises to be equal to or greater than the reference voltage.

9. The wireless charging system of anyone of claims 1-8, wherein the computing device is configured to adjust the charging control signal based on whether a maximum charging power condition is satisfied.

10. The wireless charging system of claim 9, wherein:
the maximum charging power condition is determined to be satisfied when:
the battery current reaches a predetermined limit current; or
output power of an inductive power transfer (IPT) device reaches a predetermined limit power, and
the charging control signal is adjusted so that charging current is limited when the maximum charging power condition is satisfied.

11. A control method of a wireless charging system for charging a battery, the control method comprising:
using a computing device:
receiving a voltage value and a current value of a battery sensed through a battery voltage sensor and a current sensor;
generating a charging control signal based on the received voltage value and current value;
controlling a switching operation of a sequentially connected power factor correction (PFC) circuit to regulate a direct-current bus voltage supplied to a DC-DC converter based on the charging control signal;
outputting a converter enable signal; and
controlling a switching operation of the DC-DC converter based on the converter enable signal and the charging control signal.

12. The control method of claim 11, further comprising determining a charging state based on the sensed battery voltage value, the sensed current value, and a reference value.

13. The control method of claim 11 or 12, wherein the controlling switching of the DC-DC converter comprises adjusting a switching duty ratio based on the charging control signal and the converter enable signal.

14. The control method of claim 13, wherein the adjusting the switching duty ratio comprises:
increasing the duty ratio of the DC-DC converter when the battery voltage value is lower than a first threshold value; and
decreasing the duty ratio of the DC-DC converter when the battery voltage value is higher than a second threshold value.

15. The control method of anyone of claims 11-14, further comprising selectively operating a bypass switch to directly connect the PFC and an inductive power transfer (IPT) device by bypassing the DC-DC converter, according to a charging state of the battery.
